# EUROPÄISCHE PATENTSCHRIFT

(11) **EP 1 099 873 B1**
(45) Veröffentlichungstag und Bekanntmachung des Hinweises auf die Patenterteilung: **17.08.2005**
(21) Anmeldenummer: 00124040.7
(22) Anmeldetag: 04.11.2000
(51) Int. Cl.: F16D 65/21, F16D 65/18, B60T 13/74

(54) **Kombinierter Betriebs- und Federspeicherbremszylinder und Bremseinrichtung für Nutzfahrzeuge**
Combined service and spring brake cylinder and brake device for utility vehicles
Cylindre combiné de frein de service et à ressort et dispositif de freinage pour véhicules utilitaires

(30) Priorität: 09.11.1999 DE 19953805
(43) Veröffentlichungstag der Anmeldung: 16.05.2001
(73) Patentinhaber: DaimlerChrysler AG, 70567 Stuttgart (DE)
(72) Erfinder: Fischer, Jörg, 73733 Esslingen (DE); Frey, Gerhard, 73733 Esslingen (DE); Reichle, Stephan, 73760 Ostfildern (DE); Schäfer, Ralf, 70186 Stuttgart (DE); Wippermann, Michael, 70794 Filderstadt (DE)

(56) Entgegenhaltungen:
- WO-A-00/48884
- DE-A- 19 830 154
- US-A- 4 589 531

## Beschreibung

Die Erfindung betrifft einen Betriebs- und Federspeicherbremszylinder für Nutzfahrzeuge nach dem Oberbegriff des Patentanspruches 1 sowie eine Bremseinrichtung für Nutzfahrzeuge mit zwei voneinander unabhängigen Betriebsbremskreisen nach dem Oberbegriff des Patentanspruches 7.

Es sind Bremsanlagen für Nutzfahrzeuge mit druckluftbetätigten Schreibenbremsen bekannt, welche zur Erzielung einer Bremswirkung Bremsbeläge an einen Bremskörper in Form einer Bremsscheibe andrücken.

An der Hinterachse werden dabei zumeist kombinierte Betriebs- und Federspeicherbremszylinder, sogenannte Kombi-Bremszylinder, verwendet, welche einen Membranzylinder für die Betriebsbremse und einen Federspeicherzylinder für die Feststellbremse umfassen. Beide Bremszylinder sind unabhängig voneinander betätigbar; bei gleichzeitiger Betätigung addieren sich die Bremskräfte. Eine Bremsung wird dabei über einen solchen Kombi-Bremszylinder dann eingeleitet, wenn der Betriebsbremszylinder mit Druck beaufschlagt wird, oder wenn am Federspeicherbremszylinder ein Druckluftabfall entsteht. Der Federspeicherbremszylinder kann dadurch auf an sich bekannte Weise nicht nur für eine Feststellbremsfunktion, sondern insbesondere auch für eine Notbremsfunktion, die beispielsweise bei einem ungewollten Druckabfall entstehen kann, eingesetzt werden.

Ein kombinierter Betriebsbrems- und Federspeicherbremszylinder für Nutzfahrzeuge ist beispielsweise aus der DE 198 30 154 A1 bekannt. Bei diesem kombinierten Betriebs- und Federspeicherbremszylinder weist der Betriebsbremsteil eine durch Druckluft beaufschlagbare Membran auf, welche gegenüber einem Teller und einem mit dem Teller verbundenen Betätigungsstößel wirkt. Der Federspeicherbremsteil weist eine Kolbenstange auf, die mit dem Federspeicherkolben verbunden ist und bei Betätigung durch die Speicherfeder auf die Membran wirkt und somit mittels des Tellers des Federspeicherbremsteils eine Federspeicherbremskraft auf den Betätigungsstößel ausübt. Die Speicherfeder wird auf an sich bekannte Weise gespannt, wenn die Federspeicherkammer mit Druckluft beaufschlagt wird. Ein kombinierter Betriebs- und Federspeicherbremszylinder kann daher für Betriebsbremsungen, Feststellbremsungen, aber auch für Notbremsungen verwendet werden.

Für die Anwendung in Personenkraftwägen sind ferner elektrisch betriebene Bremsaktoren vom Brake-by-Wire-Typ mit integrierter Feststellbremsfunktion bekannt. Bei diesen muss zur Aktivierung der Feststellbremsfunktion ein Bremsmoment durch die Betriebsbremse eingesetellt und gehalten werden.

Eine elektromechanisch betätigbare Bremse mit Feststellbremsfunktion geht beispielsweise aus der DE 196 52 229 A1 hervor. Diese Bremse umfasst eine integrierte Feststellbremse, bei der eine Blattfeder oder eine Drehfeder beim Bremsen durch Verbindung mit der Spindel und dem Gehäuse vorgespannt wird. Die Funktion der Feststellbremse wird dadurch realisiert, dass der Bremsaktor durch eine lösbare Blockiereinrichtung gegen Drehen blockiert oder freigegeben wird. Die Blockiereinrichtung wurde durch eine Permanentmagnet-Bremse realisiert.

Eine Bremseinrichtung für Nutzfahrzeuge ist ferner aus der DE 197 46 342 A1 bekannt. Bei dieser Druckluftbremsanlage wird ein pneumatischer Bremsdruck über elektrische Regelmodule eingestellt. Für einen Anhänger oder Auflieger ist dabei ein weiteres elektrisch gesteuertes Modul vorgesehen, welches den übermittelten Bremsdruck beeinflusst. Sämtliche Bremskreise werden über einen pneumatischen Energievorrat versorgt.

Problematisch bei pneumatischen Nutzfahrzeugbremsanlagen ist nun, dass sie nicht, wie z.B. hydraulische Bremsanlagen, als abgeschlossenes System betrachtet werden können, sondern Schnittstellen aufweisen müssen, um sie auf unterschiedliche Auflieger- oder Anhängertypen adaptieren zu können. Dabei müssen Nutzfahrzeugbremsanlagen aufgrund gesetzlicher Regelungen genau definierte Schnittstellen zwischen der Zugmaschine und dem Auflieger oder Anhänger erfüllen. Dabei muss insbesondere auch eine Anpassung auf ältere Anhänger oder Auflieger möglich sein, die im Vergleich zu Zugmaschinen eine wesentlich höhere Lebenserwartung aufweisen.

Aus der WO 00/48884 (Zwischenliteratur gemäß Artikel 54(3) EPÜ) ist ein gattungsgemäßer Betriebs- und Federspeicherbremszylinder für Nutzfahrzeuge bekannt. Der Betriebsbremszylinder weist einen ansteuerbaren Elektromotor auf, der über einen Zahnriemenantrieb eine Spindelmutter antreiben kann. Eine Kugelgewindespindel ist über die Spindelmutter axial verschiebbar, wobei bei deren Axialverschiebung der Bremsstößel des Federspeicherbremszylinders zur Einleitung der Bremskraft verschoben wird.

Die US 4, 589, 531 offenbart einen Bremszylinder mit zwei elektrisch betätigbaren Aktuatoren. Den beiden Aktuatoren ist ein gemeinsamer Bremsstößel zugeordnet, der von beiden Aktuatoren zur Einleitung der Bremskraft axial verschiebbar ist. Die beiden Aktuatoren werden dabei so angesteuert, dass ein Überbremsen verhindert wird.

Um die Vorteile eines vollelektronischen Bremssystems auch für Nutzfahrzeug-Bremsanlagen nutzen zu können, liegt der Erfindung das Problem zugrunde, einen kombinierten Betriebsbrems- und Federspeicherbremszylinder zu vermitteln, welcher eine elektrische Ansteuerbarkeit ermöglicht.

Ferner soll die Erfindung das Problem lösen, eine Bremseinrichtung für Nutzfahrzeuge derart weiterzubilden, dass sie einerseits elektrisch ansteuerbar ist, andererseits aber auch mit älteren Anhänger- oder Aufliegersystemen, welche eine pneumatische Ansteuerung erfordern, kompatibel ist.

Die oben beschriebenen Probleme werden gelöst durch einen kombinierten Betriebsbrems- und Federspeicherbremszylinder für Nutzfahrzeuge mit den Merkmalen des Patentanspruches 1 und durch eine Bremseinrichtung für Nutzfahrzeuge mit den Merkmalen des Patentanspruches 7.

Ein kombinierter Betriebsbrems- und Federspeicherbremszylinder, bei dem der Betriebsbremszylinder ein elektromechanisch betätigbarer Bremsaktor ist, weist den großen Vorteil auf, dass er einerseits elektrisch ansteuerbar ist, andererseits aber auch pneumatisch betätigbar ist. Dabei wird die Funktion des Federspeicherbremszylinders bei einem Ausfall der elektrischen Betriebsbremse nicht beeinflusst.

Eine Bremseinrichtung für Nutzfahrzeuge, bei denen wenigstens zwei elektrische Bremsaktoren Teil eines solchen kombinierten Betriebsbrems- und Federspeicherbremszylinders sind, wohingegen die beiden anderen Betriebsbremsen elektromechanische Bremsaktoren aufweisen, ist elektronisch geregelt ansteuerbar. Gleichzeitig ist eine Feststellbremsfunktion sowie eine Notbremsfunktion pneumatisch realisierbar. Eine solche Bremseinrichtung stellt ein sehr vorteilhaftes Brake-by-Wire-Bremssystem für Nutzfahrzeuge dar. Da bei dieser Bremseinrichtung die kombinierten Betriebsbrems und Federspeicherzylinder auch pneumatisch ansteuerbar sind, und auf diese Weise ein Pneumatikkreislauf erforderlich ist, ist eine solche Bremseinrichtung auch auf an sich bekannte Anhänger oder Auflieger, welche eine pneumatische Ansteuerung erfordern, anpassbar.

Vorteilhafte Ausführungsformen der Erfindung sind Gegenstand der abhängigen Unteransprüche.

Im folgenden wird die Erfindung anhand von Ausführungsbeispielen und mit Bezug auf die beiliegende Zeichnung erläutert. In der Zeichnung zeigen:
- Fig. 1: schematisch und vereinfacht eine Schnittdarstellung eines kombinierten Betriebs- und Federspeicherbremszylinders nach der Erfindung und
- Fig. 2: schematisch das Schaltbild einer Bremseinrichtung für Nutzfahrzeuge nach der Erfindung.

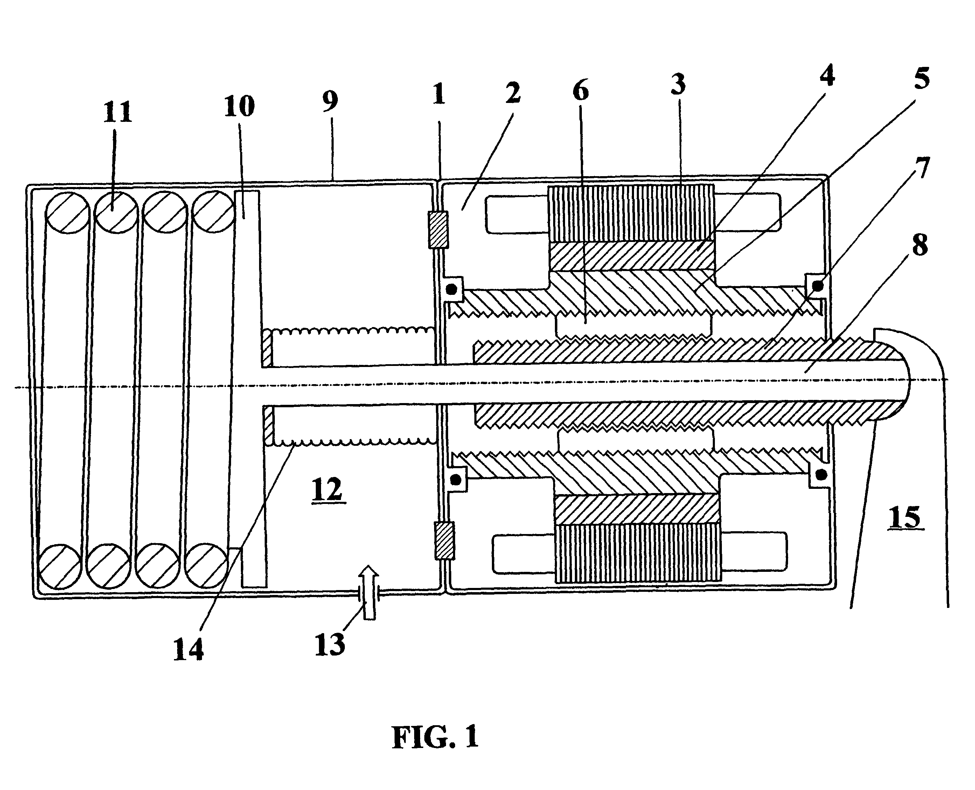

Ein kombinierter Betriebs- und Federspeicherzylinder 1, dargestellt in Fig. 1 weist einen elektromechanischen Bremsaktor 2 auf. Der Bremsaktor 2 umfasst einen Elektromotor 3, dessen Rotor 4 über eine Gewinderolle 6 einen Bremsstößel in Form einer Hohlgewindespindel 7 bewegt. Der Rotor 4 ist mit einer Gewindemutter 5 des Rollengewindetriebs verbunden. Die Gewindemutter 5 ist axial fest angeordnet, sie setzt mit Hilfe der Gewinderolle 6 die Drehbewegung des Rotors 4 in eine Linearbewegung der Hohlgewindespindel 7, welche den Bremsstößel bildet, um. Die Gewinderolle 6, die Gewindemutter 5 und die Hohlgewindespindel 7 bilden eine Umsetzeinrichtung zur Umsetzung der Drehbewegung des Rotors 4 in eine Linearbewegung des als Hohlgewindespindel 7 ausgebildeten Bremsstößels. Die den Bremsstößel bildende Hohlgewindespindel 7 ist mit einem Kraftübertragungshebel 15 torsionsfest verbunden. Über diesen Kraftübertragungshebel 15 werden Bremsbeläge an einen Bremskörper, beispielsweise eine Bremsscheibe auf an sich bekannte Weise angedrückt.

Auf den elektrischen Betriebsbremsaktor 2 angeflanscht ist ein pneumatischer Federspeicherbremszylinder 9. Dieser kann sowohl - wie in Fig. 1 dargestellt - hinter dem Betriebsbremsaktor 2 als auch vor diesem angeordnet sein, da die Anordnung des Federspeicherbremszylinders 9 und des elektrischen Betriebsbremsaktors 2 keinen Einfluss auf die Funktion hat, solange die Anordnung hintereinander erfolgt. Es variiert in diesem Falle lediglich die Ausführung der Bremsstößel. Die den Bremsstößel des Federspeicherbremszylinders 9 bildende Kolbenstange 8 des Federspeicherbremszylinders 9, welche über einen Teller 10 mit einer Feder 11 verbunden ist, wird bei einer Reduzierung des Luftdrucks in Richtung des Kraftübertragungshebels 15 (in Figur 1 nach rechts) bewegt. Die Speicherfeder 11 wird gespannt, d.h. in die in Figur 1 dargestellte Lage versetzt, wenn eine Federspeicherkammer 12 über einen pneumatischen Versorgungsanschluss 13 mit Druckluft beaufschlagt wird. Zur Abdichtung der Federspeicherkammer 12 dient eine Manschette 14, die als Ummantelung zwischen dem Teller 10 und einem Gehäuse des pneumatischen Federspeicherbremszylinders 9 angeordnet ist.

Fällt durch eine Störung im elektrischen Bordnetz oder am elektrischen Aktor die elektrische Betriebsbremse aus, wird die Funktion des Federspeicherbremszylinders 9 nicht beeinflusst. Bei einem Druckabfall des Pneumatikkreises kann die Einleitung einer Notbremsung in Abhängigkeit der elektrischen Betriebsbremse über den pneumatischen Versorgungsanschluss 13 gesteuert werden. Wie aus Fig. 1 hervorgeht, ist die den Bremsstößel des Federspeicherbremszylinders 9 bildende Kolbenstange 8 in dem Hohlraum der Hohlgewindespindel 7 gleitverschieblich geführt. Die Kolbenstange 8 ist wie die Hohlgewindespindel 7 mit dem Hebel 15 verbunden, über den eine Bremskraft auf die Bremsbeläge ausgeübt wird.

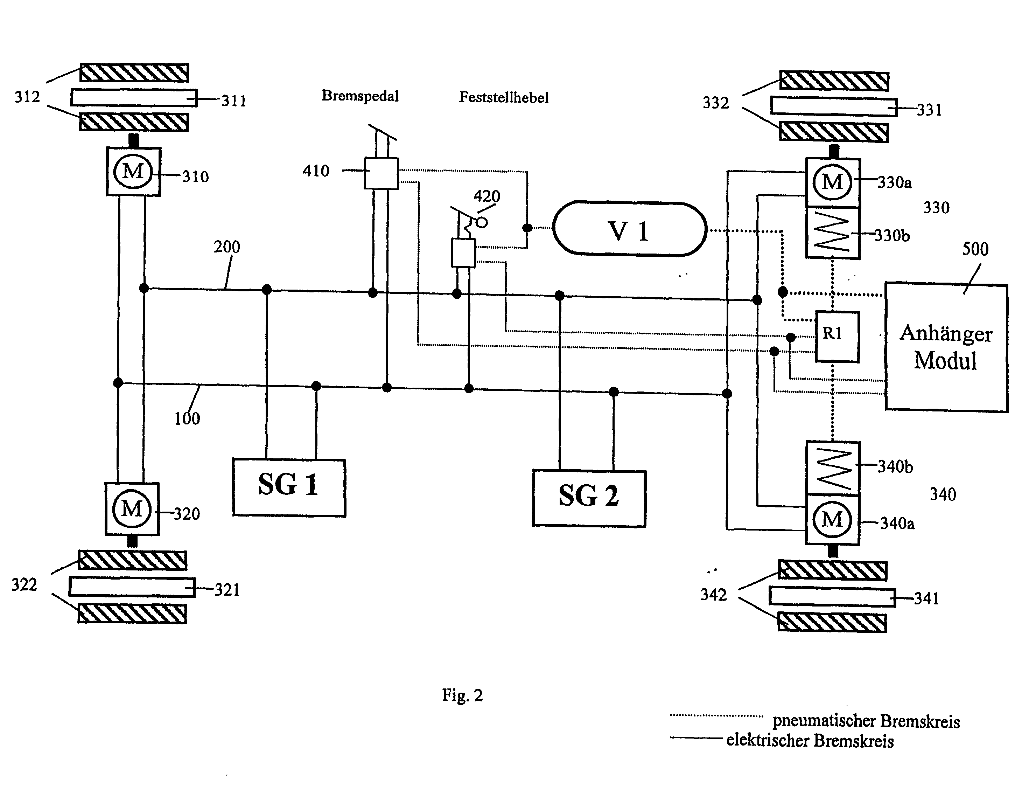

Eine erfindungsgemäße Bremseinrichtung ist in Fig. 2 dargestellt. Sie weist zwei voneinander unabhängig über elektrische Leitungen 100, 200 elektrisch ansteuerbare Bremskreise auf, wobei an einer Vorderachse zwei an sich bekannte elektrische Bremsaktoren 310, 320 angeordnet sind, welche Bremsbeläge 312 bzw. 322 an Bremsscheiben 311 bzw. 321 andrücken. An der Hinterachse sind obenbeschriebene kombinierte elektrische Betriebs- und Federspeicherbremszylinder 330, 340 angeordnet, wobei die elektrischen Betriebsbremszylinder 330a bzw. 340a jeweils einen in Verbindung mit Fig. 1 beschriebenen Bremsaktor aufweisen. Sowohl die elektrischen Betriebsbremszylinder 330a, 340a, als auch die Federspeicherbremszylinder 330b, 340b, üben beide über Bremsbeläge 332, 342 Bremskräfte auf Bremsscheiben 331, 341 aus.

Die Betriebsbremse ist über ein Bremspedal 410 betätigbar. Die elektrische Steuerung erfolgt über Steuergeräte SG1, SG2. Die Feststellbremse ist pneumatisch über einen Feststellhebel 420 betätigbar. Bei einer Betätigung des Feststellhebels 420 werden die Federspeicherbremszylinder 330b, 340b über ein Regelmodul R1 mit einem Reservoir V1 verbunden. Ein Anhängerfahrzeug (nicht dargestellt) ist über ein an sich bekanntes Anhängermodul 500 mit dem Reservoir V1 bei einer Betätigung sowohl des Bremspedals 410 als auch des Feststellhebels 420 verbindbar. Hierdurch kann auf an sich bekannte Weise ein Bremsvorgang des Anhängerfahrzeugs eingeleitet werden.

Sowohl der erste als auch der zweite Betriebsbremskreis sind über die Steuergeräte SG1 und SG2 mit den Bremsaktoren 310, 320, 330a, 340a verbunden. Dies erfordert, dass die Eingangssignale und auch die Übertragungsleitungen 100, 200 redundant ausgelegt sind. Tritt ein Ausfall eines Bauteils oder eine Störung auf, so kann dieser Defekt oder diese Störung immer noch ohne Reduzierung der Funktionsfähigkeit kompensiert werden.

Der dritte Bremskreis, der zur Betätigung der Feststellbremsfunktion sowie als Notbremskreis dient, wird durch einen pneumatischen Bremskreis auf an sich bekannte Weise realisiert.

Durch die elektrische Realisierung der Betriebsbremse fällt in der Zugmaschine ein Großteil der Komponenten heutiger sehr aufwendiger Pneumatikbremsanlagen weg. Dadurch, dass der erste und der zweite Betriebsbremskreis der Bremseinrichtung vollständig nach dem Brake-by-Wire-Prinzip arbeiten, können so Kostenvorteile und Vorteile im dynamischen Verhalten erzielt werden, wodurch unter anderem eine Bremswegverkürzung sowie ein verbessertes ABS-Verhalten realisierbar sind. Als Rückfallebene beim Ausfall beider elektrischer Betriebsbremskreise dient der pneumatische Bremskreis, der im Normalbetrieb die Feststellbremsfunktion erfüllt sowie weitere pneumatische Endverbraucher, beispielsweise das Anhängermodul 500 mit der notwendigen Druckluft versorgt. Durch diese elektrisch/pneumatische Auslegung ist insbesondere auch eine Schnittstelle zu einem Auflieger oder Anhänger realisierbar.

Über das Regelmodul R1 und das Anhängermodul 500 werden die pneumatischen Arbeitsdrücke in Abhängigkeit der elektrischen Betriebsbremskreise an die Aktoren weitergeleitet.

Die Funktionsweise der obenbeschriebenen Bremseinrichtung ist folgende: Im Normalbetrieb ist die Feststellbremse über den Feststellhebel 420 betätigbar. Durch Betätigen des Feststellhebels 420 gelangt ein pneumatischer Druck über die Pneumatikleitung zu den Federspeicherbremszylindern 330b, 340b an der Hinterachse. Bei einem Ausfall der elektrischen Energieversorgung, bei einem Defekt der elektrischen Betriebsbremsaktoren oder bei Störungen kann über den Feststellhebel 420 ein pneumatisch übertragener.Bremsdruck zur Auslösung der Federspeicherbremszylinder 330b, 340b verwendet werden. Dabei kann vorgesehen sein, dass bei einem Ausfall der elektrischen Bremskreise oder bei einem Defekt oder einer Störung ein Bremsvorgang durch die Federspeicherbremszylinder 330b, 340b an der Hinterachse automatisch erfolgt und so eine Notbremsung eingeleitet wird.

Diese "pneumatische Back-up-Funktion" weist den Vorteil gegenüber rein elektrischen Bremseinrichtungen auf, dass die zur Durchführung einer Notbremsung erforderliche Energie in Form der Federspeicherbremszylinder 330b, 340b bereits zur Verfügung steht und hierdurch jederzeit eine Notbremsung eingeleitet werden kann. Bei rein elektrischen Bremssystemen müssten dagegen umfangreiche Sicherheitsmaßnahmen im Bordnetz vorgesehen sein, damit bei einem Totalausfall der Elektronik ein Versagen der Bremse ausgeschlossen ist. Von besonderem Vorteil ist es, dass durch die Realisierung eines pneumatischen Redundanzkreises an sich bekannte Bauteile des dritten Bremskreises übernommen werden können, welche im Normalbetrieb zum Einlegen der Feststellbremse und im Notbetrieb zur Aufrechterhaltung einer, wenn auch reduzierten Bremskraft dienen. Hierdurch ist - wie oben erläutert - auf einfache Weise auch eine Schnittstelle zum Auflieger oder zum Anhänger realisierbar.

## Patentansprüche

1. Kombinierter Betriebs- und Federspeicherbremszylinder (1) für Nutzfahrzeuge, mit einem Betriebsbremszylinder, der einen elektromechanisch betätigbaren Bremsaktor (2) und einen Federspeicherbremszylinder (9) aufweist, durch die ein Bremsbelag an einen zu bremsenden Bremskörper andrückbar ist, **dadurch gekennzeichnet, dass** der Federspeicherbremszylinder (9) und der Bremsaktor (2) jeweils einen Bremsstößel zum Andrücken des Bremsbelages an den zu bremsenden Bremskörper aufweisen, die koxial zueinander angeordnet sind, wobei der Bremsstößel (8) des Federspeicherbremszylinders in dem Hohlraum des als Hohlgewindespindel (7) ausgebildeten Betriebsbremsstößels verschieblich geführt ist.

2. Kombinierter Betriebs- und Federspeicherbremszylinder (1) nach Anspruch 1, **dadurch gekennzeichnet, dass** der Bremsaktor (2) in Richtung der Bremsbeläge gesehen vor dem Federspeicherbremszylinder (9) angeordnet ist.

3. Kombinierter Betriebs- und Federspeicherbremszylinder (1) nach Anspruch 1, **dadurch gekennzeichnet, dass** der Bremsaktor (2) in Richtung der Bremsbeläge gesehen hinter dem Federspeicherbremszylinder (9) angeordnet ist.

4. Kombinierter Betriebs- und Federspeicherbremszylinder (1) nach einem der Ansprüche 1 bis 3, **dadurch gekennzeichnet, dass** der Bremsaktor (2) einen Elektromotor (3) umfasst, dessen Rotationsbewegung über eine Umsetzeinrichtung in eine Linearbewegung eines Betriebsbremsstößels (7) umsetzbar ist.

5. Kombinierter Betriebs- und Federspeicherbremszylinder (1) nach Anspruch 4, **dadurch gekennzeichnet, dass** die Umsetzeinrichtung eine mit einem Rotor (4) des Elektromotors (3) verbundene axialfeste Gewindemutter (5) umfasst, welche die Drehbewegung des Rotors (4) über eine Gewinderolle (6) in eine Linearbewegung des als Hohlgewindespindel (7) ausgebildeten Betriebsbremsstößels umwandelt.

6. Kombinierter Betriebs- und Federspeicherbremszylinder nach Anspruch 1, **dadurch gekennzeichnet, dass** die Hohlgewindespindel (7) und der Bremsstößel (8) des Federspeicherbremszylinders über einen Hebel (15) mit den Bremsbelägen verbunden sind.

7. Bremseinrichtung für Nutzfahrzeuge mit zwei voneinander unabhängigen Betriebsbremskreisen, **gekennzeichnet durch** folgende Merkmale:
- es sind vier elektrische Bremsaktoren (310; 320; 330a; 340a) vorgesehen, die jeweils beiden Betriebsbremskreisen zugeordnet und über getrennte elektrische Leitungen (100, 200) ansteuerbar sind,
- wenigstens zwei der elektrischen Bremsaktoren (330a; 340a) sind Teil eines kombinierten Betriebs- und Federspeicherbremszylinders (330; 340) gemäß einem der Ansprüche 1 bis 6.

8. Bremseinrichtung nach Anspruch 7, **dadurch gekennzeichnet, dass** bei einem Defekt oder bei einer Störung ein automatisches Lösen der Federspeicher der Federspeicherbremszylinder (330b; 340b) erfolgt.

9. Bremseinrichtung nach Anspruch 7 oder 8, **dadurch gekennzeichnet, dass** die kombinierten Betriebsbrems- und Federspeicherbremszylinder (330; 340) an der Hinterachse des Fahrzeugs angeordnet sind.

## Claims

1. Combined service and spring brake cylinder (1) for commercial vehicles, with a service brake cylinder incorporating an electro-mechanically operated brake actuator (2) and a spring brake cylinder (9) by means of which a brake pad can be pressed against a brake body to be braked, **characterised in that** the spring brake cylinder (9) and the brake actuator (2) are provided with coaxially arranged brake plungers for pressing the brake pad against the brake body to be braked, the brake plunger (8) of the spring brake cylinder being guided for movement within the cavity of the service brake plunger designed as a threaded hollow spindle (7).

2. Combined service and spring brake cylinder (1) according to claim 1, **characterised in that** the brake actuator (2) is located in front of the spring brake cylinder (9) if viewed in the direction of the brake pads.

3. Combined service and spring brake cylinder (1) according to claim 1, **characterised in that** the brake actuator (2) is located behind the spring brake cylinder (9) if viewed in the direction of the brake pads.

4. Combined service and spring brake cylinder (1) according to any of claims 1 to 3, **characterised in that** the brake actuator (2) incorporates an electric motor (3), the rotary movement of which can be converted to a linear movement of the brake plunger (7) by a converting device.

5. Combined service and spring brake cylinder (1) according to claim 4, **characterised in that** the converting device incorporates an axially fixed threaded nut (5) connected to a rotor (4) of the electric motor (3), which converts the rotary movement of the rotor (4) to a linear movement of the service brake plunger designed as a threaded hollow spindle (7) via a threaded roller (6).

6. Combined service and spring brake cylinder (1) according to claim 1, **characterised in that** the threaded hollow spindle (7) and the brake plunger (8) of the spring brake cylinder are connected to the brake pads via a lever (15).

7. Braking unit for commercial vehicles with two independent service brake circuits, **characterised by** the following features:
- four electric brake actuators (310; 320; 330a; 340a) are provided, each being assigned to both service brake circuits and capable of being controlled via separate electric lines (100, 200),
- at least two of the electric brake actuators (330a; 340a) are part of a combined service and spring brake cylinder (330; 340) according to any of claims 1 to 6.

8. Braking unit according to claim 7, **characterised in that** the springs of the spring brake cylinders (330b; 340;) are automatically released at any fault or malfunction.

9. Braking unit according to claim 7 or 8, **characterised in that** the combined service and spring brake cylinders (330; 340) are located on the rear axle of the vehicle.

## Revendications

1. Cylindre combiné de frein de service et de frein à ressort élastique (1) pour des véhicules utilitaires, comprenant un cylindre de frein de service, cylindre combiné qui présente un actionneur de freinage (2) pouvant être actionné de façon électromécanique et un cylindre de frein à ressort élastique (9), éléments grâce auxquels une garniture de frein peut être appliquée contre un corps de frein à freiner, **caractérisé en ce que** le cylindre de frein à ressort élastique (9) et l'actionneur de freinage (2) présentent, respectivement, un poussoir de frein servant à presser la garniture de frein contre le corps de frein à freiner, poussoirs de frein qui sont disposés de façon coaxiale l'un par rapport à l'autre, où le poussoir de frein (8) du cylindre de frein à ressort élastique est guidé de façon mobile dans l'espace creux du poussoir du frein de service configuré comme une tige filetée creuse (7).

2. Cylindre combiné de frein de service et de frein à ressort élastique (1) selon la revendication 1, **caractérisé en ce que** l'actionneur de freinage (2) est, vu en direction des garnitures de frein, disposé devant le cylindre de frein à ressort élastique (9).

3. Cylindre combiné de frein de service et de frein à ressort élastique (1) selon la revendication 1, **caractérisé en ce que** l'actionneur de freinage (2) est, vu en direction des garnitures de frein, disposé derrière le cylindre de frein à ressort élastique (9).

4. Cylindre combiné de frein de service et de frein à ressort élastique (1) selon l'une quelconque des revendications 1 à 3, **caractérisé en ce que** l'actionneur de freinage (2) comprend un moteur électrique (3) dont le mouvement de rotation peut être converti, par un dispositif de conversion, en un mouvement linéaire du poussoir de frein de service (8).

5. Cylindre combiné de frein de service et de frein à ressort élastique (1) selon la revendication 4, **caractérisé en ce que** le dispositif de conversion présente un écrou fileté (5), fixe axialement, relié à un rotor (4) du moteur électrique (3), lequel dispositif de conversion transforme le mouvement de rotation du rotor (4), via un galet fileté (6), en un mouvement linéaire du poussoir de frein de service configuré comme une tige filetée creuse (7).

6. Cylindre combiné de frein de service et de frein à ressort élastique selon la revendication 1, **caractérisé en ce que** la tige filetée creuse (7) et le poussoir de frein (8) du cylindre de frein à ressort élastique sont raccordés aux garnitures de frein, via un levier (15).

7. Dispositif de freinage pour des véhicules utilitaires, comprenant deux circuits de frein de service indépendants l'un de l'autre, **caractérisé par** des propriétés suivantes qui font :
- qu'il est prévu quatre actionneurs de freinage électriques (310 ; 320 ; 330a ; 340a) qui sont associés, respectivement, à deux circuits du frein de service et peuvent être commandés par des conduites électriques séparées (100, 200),
- qu'au moins deux des actionneurs de freinage électriques (330a ; 340a) font partie d'un cylindre combiné de frein de service et de frein à ressort élastique (330 ; 340) selon l'une quelconque des revendications 1 à 6.

8. Dispositif de freinage selon la revendication 7, **caractérisé en ce que** dans le cas d'un défaut de fonctionnement ou dans le cas d'un incident, il se produit un relâchement automatique du ressort élastique du cylindre de frein à ressort élastique (334b ; 340b).

9. Dispositif de freinage selon la revendication 7 ou 8, **caractérisé en ce que** les cylindres combinés de frein de service et de frein à ressort élastique (330 ; 340) sont disposés sur l'essieu arrière du véhicule.
